Europäisches Patentamt

European Patent Office

Office européen des brevets

(11) Veröffentlichungsnummer: **0 278 376 B1**

(12) **EUROPÄISCHE PATENTSCHRIFT**

(45) Veröffentlichungstag der Patentschrift: **10.07.91**

(21) Anmeldenummer: **88101529.1**

(22) Anmeldetag: **03.02.88**

(51) Int. Cl.⁵: **F16D 69/04**, F16D 65/06, B61H 1/00

(54) **Bremsklotz für Schienenfahrzeuge.**

(30) Priorität: **09.02.87 DE 3703895**

(43) Veröffentlichungstag der Anmeldung:
**17.08.88 Patentblatt 88/33**

(45) Bekanntmachung des Hinweises auf die
Patenterteilung:
**10.07.91 Patentblatt 91/28**

(84) Benannte Vertragsstaaten:
**DE FR GB NL SE**

(56) Entgegenhaltungen:
**EP-A- 0 226 816    DE-A- 2 152 315**
**DE-A- 2 152 316    DE-A- 2 161 152**
**DE-C- 690 564      US-A- 2 504 712**

(73) Patentinhaber: **KNORR-BREMSE AG**
**Moosacher Strasse 80 Postfach 401060**
**W-8000 München 40(DE)**

(72) Erfinder: **Rathje, Claus**
**Lange Reihe 3**
**W-2301 Felm(DE)**
Erfinder: **Schörwerth, Mathias**
**Lilienstrasse 3**
**W-8192 Geretsried 1(DE)**
Erfinder: **Staltmeir, Josef**
**Knorrstrasse 83**
**W-8000 München 40(DE)**
Erfinder: **Wosegien, Bernd**
**Angerweg 8**
**W-8000 München 83(DE)**
Erfinder: **Wrobleski, Hans-Günter**
**Heinz-Katzenberger-Strasse 5a**
**W-8042 Oberschleissheim(DE)**

Rank Xerox (UK) Business Services

**Beschreibung**

Die Erfindung betrifft einen Bremsklotz für Schienenfahrzeuge, mit einem Bremsklotzhalter und einer Vielzahl von Reibklötzen, wobei der Bremsklotzhalter eine der Laufflächenkrümmung des abzubremsenden Rades angepaßte, schwalbenschwanzartige Führungsbahn zur Halterung der in diese eingreifenden, bezogen auf die Führungsbahn kurzen, aneinander anliegenden Reibklötze aufweist, und wobei die Mündungen der Führungsbahn einerseits von einem mit dem Bremsklotzhalter starr, jedoch lösbar verbundenen, ersten Verschlußteil und andererseits von einem am Bremsklotzhalter in Längsrichtung der Führungsbahn begrenzt beweglich gehaltenen, zweiten Verschlußteil verschlossen ist, und mit einer manuell spannbaren Feder, welche zwischen den Bremsklotzhalter und das zweite Verschlußglied, letzteres mit ihrer Vorspannkraft zur Mündung der Führungsbahn belastend, einspannbar ist.

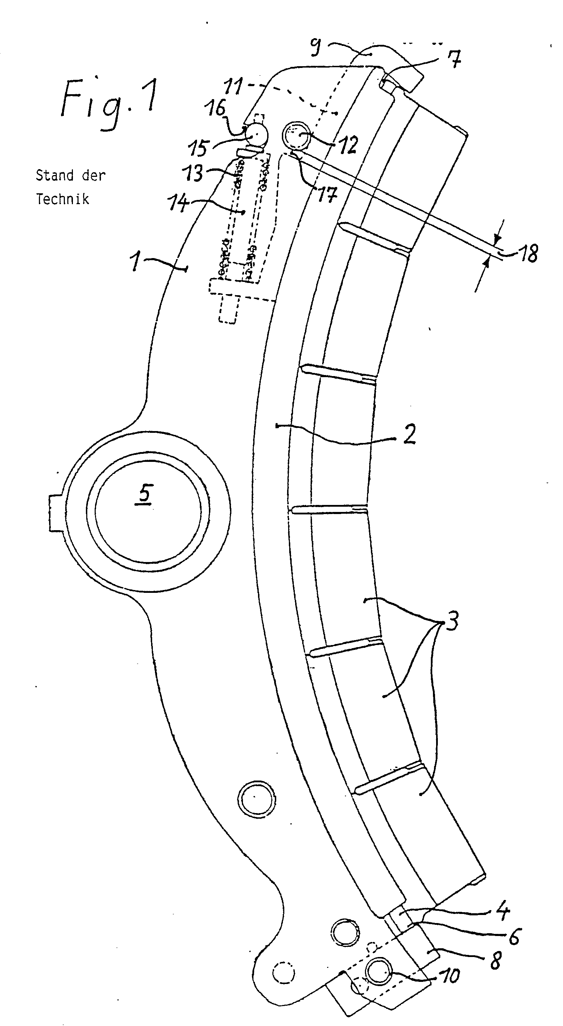

Derartige, der Fig.1 entsprechende Bremsklötze sind in Gebrauch. Der doppelwangig ausgebildete Bremsklotzhalter 1 weist dem nicht dargestellten, abzubremsenden Rad zugewandt eine Führungsbahn 2 auf, welche entsprechend der Laufflächenkrümmung des Rades gekrümmt verläuft und welche einen schwalbenschwanzartigen Querschnitt besitzt. Die Führungsbahn 2 nimmt eine Vielzahl von in einer Reihe angeordneten, aneinander anliegenden, kurzen Reibklötzen 3 auf, die Reibklötze 3 greifen mit zur Führungsbahn 2 komplementär gestalteten Halteabschnitten 4 längsverschieblich in die Führungsbahn 2 ein. Den Reibklötzen 3 abgewandt weist der Bremsklotzhalter 1 ein Lagerauge 5 zum Anlenken an einen Bremshebel, ein Bremsdreieck oder dergleichen auf. Die Mündungen 6 und 7 der Führungsbahn sind durch je ein Verschlußteil verschlossen. Der Mündung 6 ist ein erstes Verschlußteil 8 zugeordnet, welches mittels eines Querbolzens 10 starr, jedoch lösbar am Bremsklotzhalter 1 befestigt ist. Die andere Mündung 7 ist von einem zweiten Verschlußteil 9 verschlossen, welches einen schieberartigen, in Längsrichtung des Bremsklotzhalters 1 verschieblich zwischen dessen Wangen eingreifenden Abschnitt 11 aufweist. Ein den Abschnitt 11 überkreuzender, am Bremsklotzhalter 1 gehaltener Querstift 12 hält das zweite Verschlußteil 9 in seiner längsverschieblichen Lage. Am der Mündung 7 abgewandten Ende des zweiten Verschlußteiles 9 greift eine Feder 13 an, welche von einer sie durchsetzenden, in einer Bohrung des zweiten Verschlußteiles 9 verschießlich geführten Führungsstange 14 geführt ist. Am der Anlage der Feder 13 am zweiten Verschlußteil 9 abgewandten Ende ist die Führungsstange 14 mit einem Querstift 15 fest verbunden, welcher in hakenartige Ausnehmungen 16 der Wangen des Bremsklotzhalters 1 einhängbar ist. Die Feder 13 verläuft im wesentlichen in Längsrichtung der Führungsbahn 2 und belastet mit ihrer Vorspannung das zweite Verschlußteil 9 in Andrückrichtung an die Mündung 7. Das zweite Verschlußteil 9 weist ferner eine Anschlagfläche 17 auf, welche nach einem Verschiebeweg 18 des zweiten Verschlußteiles 9 in Entfernungsrichtung von der Mündung 7 am Querstift 12 anschlägt; der Verschiebeweg 18 entspricht dabei der Summe der Längentoleranzen der Reibklötze 3 sowie deren maximaler Wärmedehnung bei Erhitzungen während Bremsungen.

Zum Austausch verschlissener gegen neue Reibklötze 3 ist anfänglich der Querstift 15 aus der Ausnehmung 16 unter Entspannen der Feder 13 manuell auszuhängen. Die Vorspannung der Feder 13 muß hierbei ohne Hilfsvorrichtung händisch überwunden und gehalten werden. Der zweite Verschlußteil 9 kann dann im Rahmen des Verschiebeweges 18 zur Wegnahme der Längsverspannung der Reibklötze 3 verschoben werden. Sodann ist durch Lösen des Querbolzens 10 das erste Verschlußteil 8 zu entfernen, woraufhin die Reibklötze 3 gemäß Fig.1 nach unten aus der Führungsbahn 2 ausgefädelt und neue Reibklötze eingefädelt werden können. Insbesondere die neuen Reibklötze 3 besitzen ein beachtliches Gewicht, welches beim Wiederbefestigen des ersten Verschlußteiles 8 mit Einsetzen des Querbolzens 10 händisch gehalten werden muß. Sodann ist der Querstift 15 unter Spannen der Feder 13 rein manuell wieder in die Ausnehmung 16 einzuhängen, wobei die Vorspannung der Feder 13 die Reibklötze 3 in ihrer Längsrichtung verspannt. Die manuell aufbringbare Kraft ist relativ niedrig, die Vorspannung der Feder 13 muß dementsprechend niedrig bemessen werden. Trotzdem werden von der den Reibklotzwechsel ausführenden Person hohe Kraftaufwendungen zum Halten der in die Führungsbahn 2 eingesetzten, neuen Reibklötze insbesondere während des Befestigens des ersten Verschlußteiles 8 sowie nachfolgend beim Einhängen des Querstiftes 15 in die Ausnehmung 16 gefordert. Die geringe, der Feder 13 verleihbare Vorspannung hat zur Folge, daß bei nach Fig.1 rechtsdrehendem, abzubremsenden Rad während stärkeren Bremsungen die Reibklötze 13 unter ihrer Reibkraft zur Radlauffläche sich in der Führungsbahn 2 nach oben verschieben können, wobei sie das zweite Verschlußteil 9 mitnehmen, bis die Anschlagfläche 17 am Querstift 12 anschlägt. Die Reibung der Reibklötze 3 in der Führungsbahn 2 zum Bremsklotzhalter 1 in Verbindung mit der schwachen Vorspannkraft der Feder 13 vermag die erwähnte Verschiebung kaum zu hindern, da sie durch unvermeidliche, dynamische Stoßbelastungen aufgehoben werden kann. Durch diese und auch durch sonstige, durch dynamische Belastungen entgegen der schwachen Federbelastung mögliche Verschiebungen der Reibklötze 3 in der Führungsbahn 2 werden beide verschlissen und ausgeschlagen, so daß letztlich auch der Bremsklotzhalter 1 ausgetauscht werden muß, und es können störende Klapper- und Schlaggeräusche auftreten.

Der Erfindung liegt die Aufgabe zugrunde, einen Bremsklotz der eingangs genannten Art mit einfachen Mitteln derart auszugestalten, daß die Reibklötze unabhängig von der Drehrichtung des abzubremsenden Rades unverschieblich gehalten werden, so daß kein unnötiger Verschleiß auftritt und Klapper- und Schlaggeräusche vermieden werden. Dabei soll nach wie vor ein rein manuelles Wechseln der Reibklötze 3 möglich sein.

Diese Aufgabe wird nach der Erfindung dadurch gelöst, daß die Vorspannkraft der Feder die maximal von den Reibklötzen in Längsrichtung der Führungsbahn ausübbare, freie Verschiebekraft übersteigt und daß am Bremsklotzhalter eine manuell betätigbare Vorrichtung mit integrierter Übersetzung zum Spannen der Feder vorgesehen ist. Die maximale Verschiebekraft kann aus Versuchen ermittelt oder unter Berücksichtigung der Reibkraft und der maximalen, dynamischen Belastung sowie der Masse der Reibklötze berechnet werden. Durch die so bemessene Feder werden die Reibklötze unabhängig von der Drehrichtung des abzubremsenden Rades stets in vorgespannter Anlage am ersten Verschlußteil 8 gehalten, sie erfahren während keiner Bremsung und unter keiner dynamischen Belastung eine Verschiebung in der Führungsbahn 2; zugleich wird durch die Vorrichtung sichergestellt, daß die Feder zu Abschluß der Montage der Reibklötze 3 manuell auf die erforderliche Spannung spannbar ist.

Die nach der weiteren Erfindung vorteilhaften Ausgestaltungsmöglichkeiten für einen derartigen Bremsklotz sind in den Unteransprüchen angegeben.

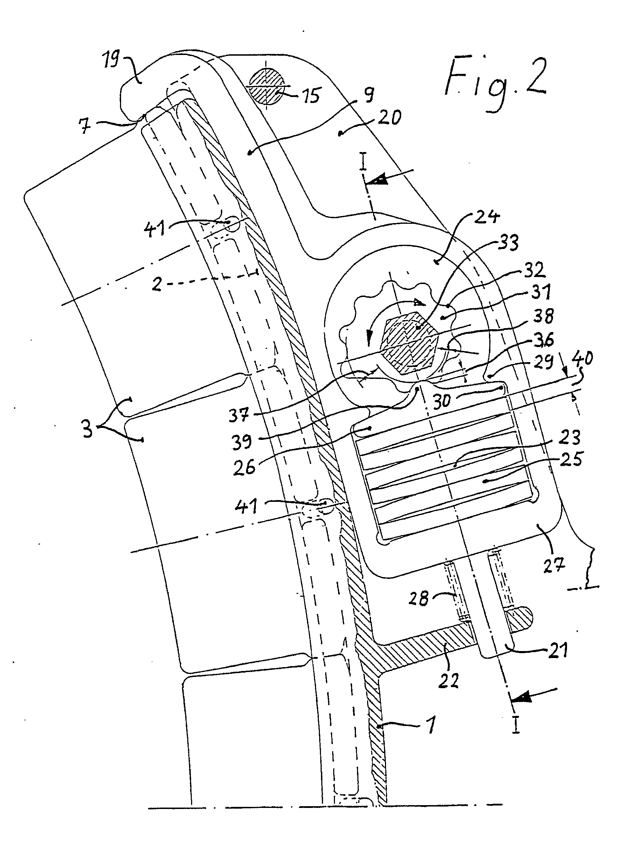

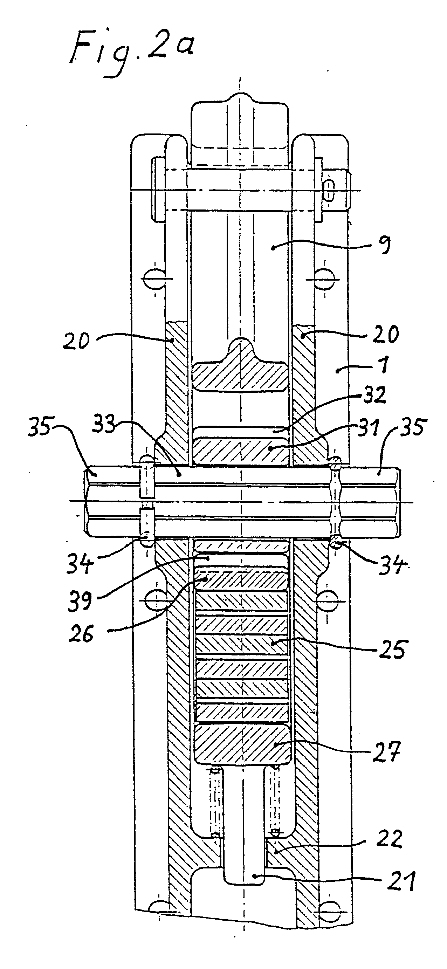

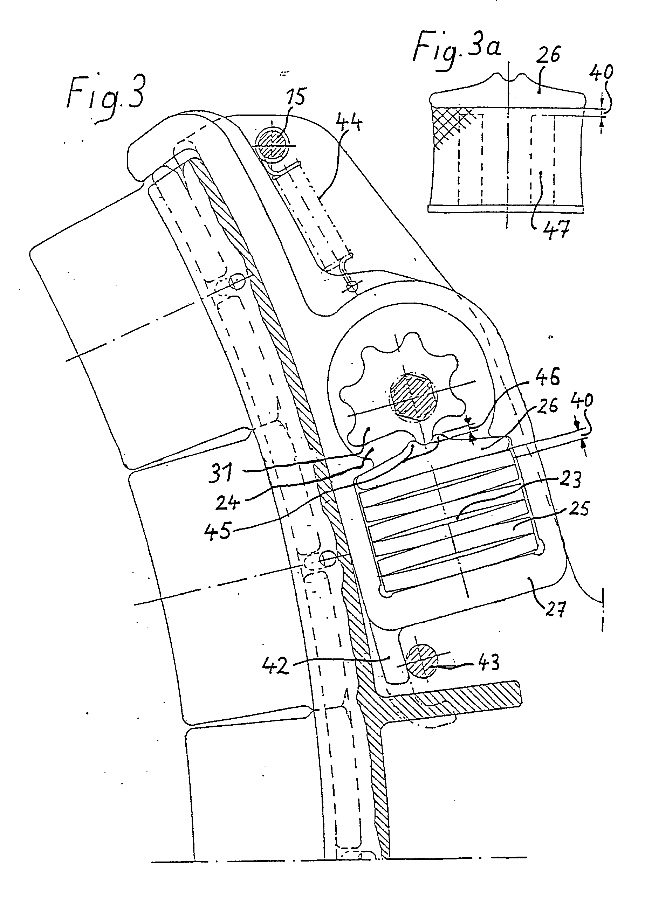

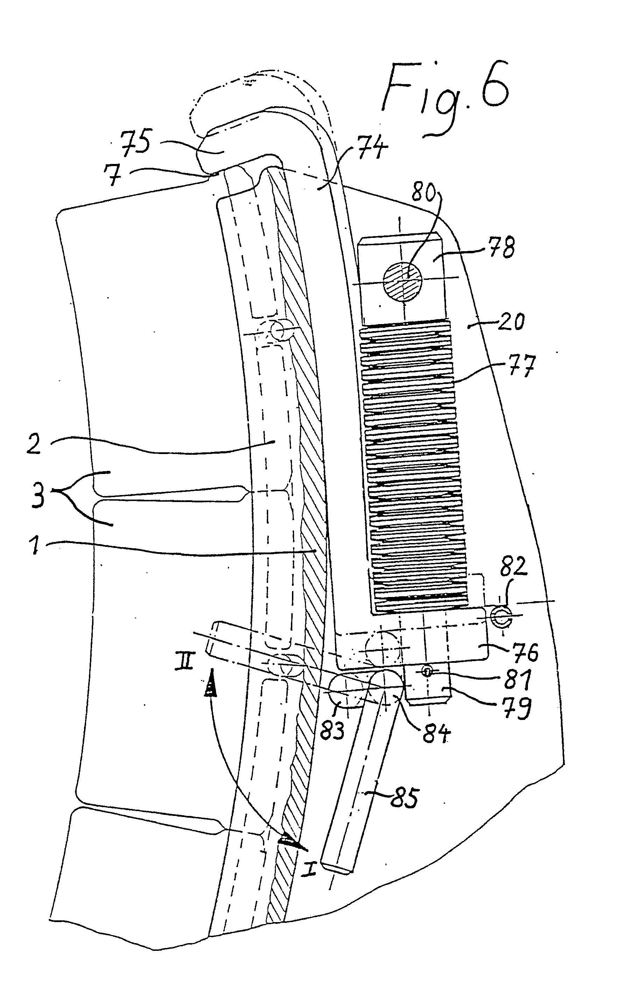

In den Zeichnungen Fig.2 bis Fig.7 sind unterschiedliche Ausführungsbeispiele für nach der Erfindung ausgebildete Bremsklötze dargestellt, wobei Fig.2a einen Schnitt gemäß Linie I-I nach Fig.1 darstellt, Fig.3a eine abgewandelte Einzelheit zu Fig.2 oder 3 und Fig.7 eine abgewandelte Einzelheit zu Fig.6 zeigt.

Die Figuren 2 und 2a zeigen ein besonders bevorzugtes Ausführungsbeispiel. Der erste Verschlußteil kann in beliebiger Weise starr, jedoch lösbar mit dem Bremsklotzhalter 1 verbunden sein, beispielsweise in der aus Fig.1 entnehmbaren Art; er ist daher in Fig.2 nicht dargestellt. Der zweite, mit einem hakenartigen Abschnitt 19 die Mündung 7 der Führungsbahn 2 übergreifende, zweite Verschlußteil 9 ist, wie zu Fig.1 beschrieben, längsverschieblich zwischen den Wangen 20 des Bremsklotzhalters 1 gelagert, wobei er an einem Abklappen an seinem mündungsseitigen Ende durch den in den Wangen 20 gehaltenen Querstift 15 gehindert ist. Andererseits endet das zweite Verschlußteil 9 mit einem etwa in seiner Verschiebrichtung vorspringenden Bolzenansatz 21, welcher mit Spiel und somit längsverschieblich sowie etwas seitlich auslenkbar in einer Bohrung eines Quersteges 22 des Bremsklotzhalters 1 geführt ist. In seinem mittleren Bereich ist das zweite Verschlußteil 9 rahmenartig derart ausgestaltet, daß es einen Federkäfig 23 und eine zu diesem offene Ausnehmung 24 bildet. Im Federkäfig 23 befindet sich ein Paket von Teller- bzw. Blattfedern, im weiteren Tellerfeder 25 genannt, welche in dem Federkäfig 23 elastisch vorgespannt ist und welche seitens der Mündung 7 an einem rechteckigen Federteller 26 und andererseits unmittelbar an einer Wandung 27 des zweiten Verschlußteiles 9 anliegt. Die Wandung 27 trägt auf ihrer der Tellerfeder 25 abgewandten Seite den Bolzenansatz 21, zwischen die Wandung 27 und dem Quersteg 22 ist eine zur Tellerfeder 25 sehr schwache, das zweite Verschlußteil 9 in Entfernungsrichtung von der Mündung 7 belastende Feder 28 eingespannt. Der Federteller 26 ist durch den Federkäfig 23 von der Ausnehmung 24 abgrenzende Nasen 29 des zweiten Verschlußteiles 9 abgestützt, er weist gerundete Stirnflächen 30 auf, wodurch ein Kippen des Federtellers 26 relativ zum Federkäfig 23 möglich ist. Die Ausnmehmung 24 umschließt mit großem, radialen Spiel einen drehbaren Nocken 31, dessen Außenumfang 32 als eine von einer Wellung überlagerte Spirale ausgebildet ist. Der Nocken 31 ist drehfest auf einer Sechskantwelle 33 gehalten, die drehbar in Bohrungen der Wangen 20 gelagert ist und axial durch in Eindrehungen eingesetzte Federringe 34 gesichert ist. Zum manuellen Drehen sind an von den Seitenwangen 20 nach außen auskragende Stummel 35 der Sechskantwelle 33 geeignete Drehwerkzeuge ansetzbar.

Die Wellung des Außenumfanges 32 des Nockens 31 weist eine Tiefe 36 auf, die etwa der maximalen Längsdehnung der Reibklötze 3 bei ihrer Erwärmung während Bremsungen entspricht; diese Tiefe 36 kann beispielsweise 3 mm betragen. Die spiralige Steigung 37 des Außenumfanges 32 des Nockens 31 entspricht etwa der Summe der Längentoleranzen der Reibklötze 3, sie kann beispielsweise 12 mm betragen. Aus der Steigung 37 und der Anzahl der Wellungen am Außenumfang 32 errechnet sich eine Höhendifferenz 38 zwischen dem Grund benachbarter Wellungen, welche bei den angegebenen Werten und beispielsweise acht Wellungen 1,5 mm betragen kann. Der Federteller 26 trägt nockenseitig eine vorspringende, gerundete Nase 39, welche in die Wellung des Außenumfanges 32 eingreift und auf deren Grundflächen aufzuliegen vermag. Die Tellerfeder 25 ist um einen Hub 40 komprimierbar, der etwas größer als die Tiefe 36, aber kleiner als die Summe der Tiefe 36 und der Höhendifferenz 38 ist, sie kann beispielsweise 4 mm betragen. Nach Zurücklegen des Hubes 40 ist die Tellerfeder 25 auf Block gedrückt und wirkt wie ein fester Anschlag. Bei Aufbrauch des Hubes 40 schlägt die Tiefe 36 bzw. ein Wellungsgrund des Nockenrades 31 auf die gerundete Nase 39 des Federtellers 26 und schnappt zurück. Somit wird das benötigte Spiel für die Wärmeausdehnung der Reibklötze 3 immer gewährt.

Wenigstens eine Wandung der Führungsbahn 2 sowie die Reibklötze 3 weisen miteinander fluchtende Querbohrungen 41 auf, in welche nicht dargestellte Stifte einführbar sind. Anstelle der Querbohrungen 41 können auch nutenartige Ausnehmungen oder dergleichen vorgesehen sein.

Im montierten Zustand mit in der Führungsbahn 2 befindlichen Reibklötzen 3 stützt sich die Nase 39 des Federtellers 26 auf den Grund einer Wellung am Außenumfang 32 des Nockens 31 auf, die Tellerfeder 25 ist somit gegen den Bremsklotzhalter 1 abgestützt. Die Tellerfeder 25 weist eine Vorspannung auf, welche größer ist, als die insbesondere während Bremsungen, aber auch im Lösezustand an den Reibklötzen 3 angreifenden Verschiebekräfte, sie belastet das zweite Verschlußteil 9 entgegen der schwachen Kraft der Feder 28 in Andrückrichtung an die Mündung 7 und hält die Reibklötze 3 unter einer ihrer Vorspannung entsprechenden Längsverspannung. Unabhängig von der Drehrichtung des abzubremsenden Rades werden die Reibklötze 3 somit immer spiel- und damit bewegungsfrei in ihrer Lage gehalten.

Zum Auswechseln verschlissener gegen neue Reibklötze wird anfänglich der Nocken 31 mittels eines auf einen Stummel 35 aufzusetzenden Schraubenschlüssels gemäß Fig.2 nach links gedreht, wobei die Nase 39 in, bezogen auf die Steigung 37, tiefer liegende Außenumfangsbereiche des Nockens 31 gelangt, wodurch die Tellerfeder 25 entspannt wird. Beim Übergleiten der Wellungsberge vermag der Federteller 26 infolge seiner gerundeten Stirnflächen 30 etwas zu kippen, wodurch ein leichtes Übergleiten der Wellungsberge möglich ist. Beim Entspannen der Tellerfeder 25 drückt die Feder 28 das zweite Verschlußteil 9 von der Mündung 7 um einen geringen Hubbetrag weg, die Bewegung kann durch einen nicht dargestellten Anschlag, beispielsweise einen den Bolzenansatz 21 an seinem den Quersteg 22 überragenden Ende querdurchsetzenden Splint, begrenzt sein. Hierbei wird die Spannung von den Reibklötzen 3 weggenommen. In die Querbohrungen 41 der beiden dem ersten Verschlußteil 8 benachbarten Reibklötze 3 kann ein nicht dargestellter Stift eingeführt werden. Nunmehr kann das erste Verschlußteil 8 abgenommen werden, wobei es von den Reiblötzen 3 unbelastet ist, da diese durch die erwähnten Querstifte gehalten werden. Durch entsprechendes Versetzen der beiden Querstifte können nun die einzelnen Reiblötze 3 nach unten aus der Führungsbahn 2 herausgeführt werden. In Abänderung ist es jedoch auch möglich, das erste Verschlußteil 8 ohne Einsetzen der Querstifte zu entfernen, woraufhin sämtliche Reibklötze 3 nach unten aus der Führungsbahn 2 herausfallen.

Nun können die neuen Reibklötze 3 von unten in die Führungsbahn 3 nacheinander eingeführt werden, wobei der jeweils unterste, eingeführte Reibklotz 3 durch einen in die Querbohrung 41 einzusetzenden Stift in seiner Lage zu halten ist und damit die zuvor eingeführten, über ihm befindlichen Reibklötze 3 trägt. Es ist somit immer nur ein Reibklotz 3 in die Führungsbahn einzuführen und in dieser zu halten, was ohne großen Kraftaufwand möglich ist. Nach Einführen des untersten Reibklotzes 3 und dessen Sicherung durch einen Querstift kann das erste Verschlußteil 8 ebenfalls ohne großen Kraftaufwand montiert werden. Nunmehr sind die Stifte aus den Querbohrungen 41 zu entfernen. Anschließend wird der Nocken 38 im Uhrzeigersinn gedreht, wobei die Nase 39 über die Wellung am Außenumfang 32 ratscht und die Tellerfeder 25 entsprechend gespannt wird. Auch hierbei vermag die Nase 39 unter Kippbewegungen des Federtellers 26 die Wellungsberge des Nockens 31 leicht zu übergleiten. Sobald die erforderliche Vorspannung der Tellerfeder 25 erreicht ist, wird diese beim Weiterdrehen des Nockens 31 vor dem Übergleiten der Nase 39 über den nächstfolgenden Wellungsberg auf Block gedrückt, so daß dieser Wellungsberg nicht unter der Nase 39 durchtreten kann, das Weiterdrehen des Nockens 38 ist blockiert. Bei Freigabe des Nockens 31 gelangt die Nase 39 auf den Grund des dem erwähnten Wellungsberg vorangehenden Wellungstales zur Anlage, die Vorspannung der Tellerfeder 25 ist dabei richtig einjustiert. Während des Drehens des Nockens 31 im Uhrzeigersinn wird über den Federteller 26, die Tellerfeder 25 und die Wandung 27 das zweite Verschlußteil 9 in Annäherungsrichtung an die Mündung 7 verschoben, wobei die herstellungsbedingten Längstoleranzen der Reibklötze 3 aufgenommen werden und die Reibklötze 3 an den beidseitigen Verschlußteilen 8 und 9 zur Anlage gelangen.

Gemäß Fig.3 kann die Wandung 27 anstelle des Bolzenansatzes 21 einen Fortsatz 42 tragen, welcher von einem Querbolzen 43 zur Führung des zweiten Verschlußteiles 9 übergriffen ist. Anstelle der Feder 28 nach Fig.2 ist bei der Ausführung nach Fig.3 zwischen dem Querstift 15 und einen Wandungsabschnitt des zweiten Verschlußgliedes 9 eine Zugfeder 44 eingespannt. Der Federteller 26 weist gemäß Fig.3 eine Doppelnase 45 auf, zwischen deren Erhebungen die Wellungsberge des Nockens 31 am Federteller 26 anliegen. Die beidseitigen Erhebungen der Doppelnase 45 weisen eine der Tiefe 36 nach Fig.2 entsprechende Höhe 46 auf. 1m übrigen entspricht der Aufbau des Bremsklotzes nach Fig.3 demjenigen nach Fig.2. Unter Berücksichtigung dessen, daß nach Fig.3 nicht die Wellungstäler, sondern die Wellungsberge des Nockens 31 am Federteller 26 anliegen, ist auch die Funktionsweise des Bremsklotzes nach Fig.3 derjenigen des Bremsklotzes nach Fig.2 sehr ähnlich und braucht daher nicht weiter erläutert zu werden.

In weiterer Abänderung kann bei den Bremsklötzen nach Fig.2 und 3 anstelle der Tellerfeder 25 eine Gummifeder 47 gemäß Fig.3a in den Federkäfig 23 eingesetzt werden. Der jeweils entsprechende Federteller 26 kann mit der Gummifeder 47 verbunden sein.

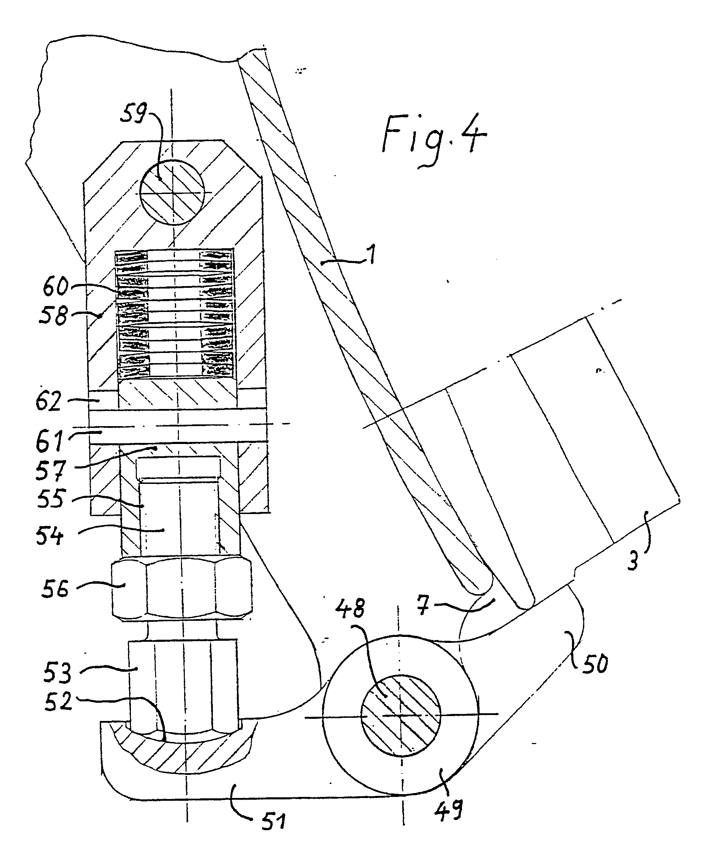

Gemäß Fig.4 ist am Bremsklotzhalter 1 mittels eines Querbolzens 48 ein Hebel 49 drehbar gelagert, dessen eines Hebelende 50 vor die Mündung 7 ragt und an einem Reibklotz 3 anliegt und an dessen anderem Hebelende 51 mit einer balligen Lagerfläche 52 das Kopfende 53 eines Stößels 54 anliegt. Der Stößel 54 ist mittels einer Verschraubung 55, welche durch eine Kontermutter 56 sicherbar ist, in seiner Länge einstellbar und greift mit seinem Mutterteil 57 verschieblich in einen Federtopf 58 ein. Der Federtopf 58 ist mittels eines Bolzens 59 schwenkbar am Bremsklotzhalter 1 angelegt. Zwischen das Mutterteil 57 und den Boden des Federtopfes 58 ist eine Tellerfeder 60 eingespannt. 1m Mutterteil 57 ist ein Querstift 61 gehalten, welcher in Langlöcher 62 des Federtopfes 58 eingreift und in diesen begrenzt verschieblich geführt ist. Das andersseitige, erste Verschlußteil kann wie in Fig.1 dargestellt ausgebildet sein.

Vor einer Entnahme verschlissener Reibklötze ist der Stößel 54 durch Verschrauben derart zu verkürzen, daß die Kraft der Tellerfeder 60 durch den Querstift 61 zum Federtopf 58 abgefangen wird. Durch Drehen des Hebels 49 im Uhrzeigersinn werden dabei die Reibklötze 3 entspannt. Nach dem Einsetzen neuer Reibklötze 3 und dem Anbringen des ersten Verschlußgliedes wird der Stößel 54 durch Verschrauben derart verlängert, daß nach Längsverspannen der Reibklötze 3 durch entsprechendes Drehen des Hebels 49 der Querstift 61 vom unteren Ende der Langlöcher 62 gerade abgehoben wird; die Tellerfeder 60 weist dabei eine Vorspannung auf, welche größer ist als die maximal auf die Reibklötze 3 einwirkende Verschiebekraft. Die Reibklötze 3 werden daher, wie zu den zuvor beschriebenen Ausführungsbeispielen bereits beschrieben, unabhängig von ihren Längentoleranzen spielfrei und unbeweglich im Bremsklotzhalter 1 verspannt. Bei Wärmedehnungen der Reibklötze 3 wird der Hebel 49 im Uhrzeigersinn unter weiterer Kompression der Tellerfeder 60 gedreht, die Tellerfeder 60 muß somit lediglich einen elastischen Hub aufweisen, welcher der maximalen Wärmedehnung der Reibklötze 3 entspricht; die Länge der Langlöcher 62 muß entsprechend bemessen sein.

In Abänderung kann der Stößel 54 auch derart verkürzbar ausgebildet sein, daß das Kopfende 53 aus der Lagerfläche 52 aushebbar ist, woraufhin der Federtopf 58 mitsamt dem Stößel 54 um den Bolzen 59 zur Seite geschwenkt werden kann. Der Hebel 49 kann sodann um den Querbolzen 48 um ca. 90° im Uhrzeigersinn gedreht werden, wobei das Hebelende 50 die Mündung 7 völlig frei gibt. Die Reibklötze 3 sind dann auf Seiten der Mündung 7 vom Bremsklotzhalter 1 entfernbar und in diesen wieder einsetzbar. Das andersseitige, erste Verschlußteil kann bei dieser Ausführung unlösbar, gegebenenfalls einstückig mit dem Bremsklotzhalter 1 verbunden sein.

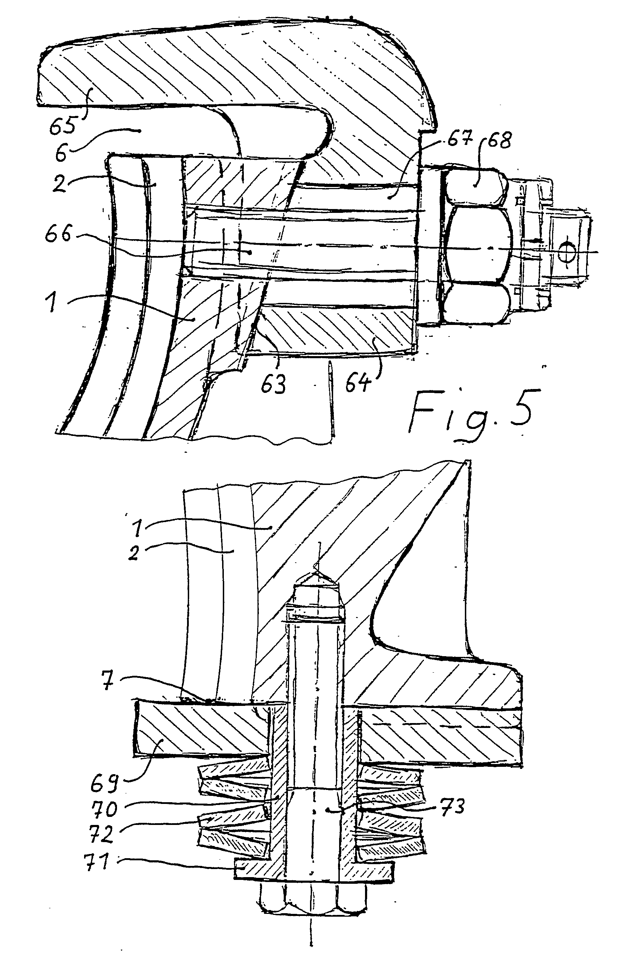

In Fig.5 sind die beiden Enden eines weiteren Ausführungsbeispieles eines Bremsklotzes dargestellt. Nahe der Mündung 6 trägt der Bremsklotzhalter 1 eine zur Mündung hin ansteigende Keilfläche 63, auf welcher mit einer entsprechenden Keilfläche das erste Verschlußteil 64 aufliegt. Das erste Verschlußteil 64 ist etwa winkelförmig gestaltet, die Keilfläche befindet sich auf der Innenseite des einen Schenkels und der andere Schenkel 65 ragt vor die Mündung 6. Das erste Verschlußteil 64 ist von einem zur Längsrichtung der Führungsbahn 2 etwa rechtwinklig verlaufenden Schraubbolzen 66 in einer diesen mit weitem Spiel umgebenden Bohrung 67 durchragt. Mittels einer gesicherten Mutter 68 bzw. eines Kopfteiles drückt der Schraubbolzen 66 das erste Verschlußteil 64 an den Bremsklotzhalter 1 an. Die andersseitige Mündung 7 der Führungsbahn 2 ist von einer zur Führungsbahn 2 etwa senkrecht verlaufenden Platte als zweites Verschlußteil 69 verschlossen. Das zweite Verschlußteil 69 ist von einer zur Längsrichtung der Führungsbahn 2 etwa parallel verlaufenden Buchse 70 durchgriffen, deren eines Ende stirnseitig an den Bremsklotzhalter 1 anlegbar ist und deren anderes Ende einen Ringflansch 71 trägt. Zwischen dem Ringflansch 71 und das zweite Verschlußteil 69 ist eine Tellerfeder 72 eingespannt. Ein zur Führungsbahn 2 etwa parallel verlaufender Schraubbolzen durchgreift die Buchse 70 und ist mit dem Bremsklotzhalter 1 verschraubt, er hält die Tellerfeder 72 vorgespannt, so daß das zweite Verschlußteil 69 federnd mit hoher Vorspannung an die Stirnseite des Bremsklotzhalters 1 angedrückt wird.

Zum Einführen von Reibklötzen wird der Schraubbolzen 66 gelöst, so daß das erste Verschlußteil 64 lose wird und von der Mündung 6 weggenommen werden kann. Die Reibklötze werden derart in die Führungsbahn 2 eingeführt, daß sie spielfrei aneinander und am zweiten Verschlußteil 69 anliegen. Sodann wird das erste Verschlußteil 64 derart angesetzt, daß es am letzten Reibklotz anliegt, wobei es höchstens lose auf der Keilfläche 63 aufliegt. Beim nachfolgenden Festziehen des Schraubbolzens 66 wird das erste Verschlußteil 64 etwas gemäß Fig.5 nach unten verschoben bzw. gedreht, wobei es fest auf die Keilfläche 63 aufgespannt wird und die Reibklötze in der Führungsbahn 2 derart nach unten drückt, daß das zweite Verschlußteil 69 entgegen der Kraft der Tellerfeder 72 geringfügig von der Mündung 7 abgekippt wird. Die Vorspannung der Tellerfeder 72 entspricht dabei wieder zumindest der maximal auf die Reibklötze einwirkenden Verschiebekraft und ihr Hubbereich entspricht der maximalen Wärmelängsdehnung der Reibklötze. Bei der Ausführungsform nach Fig.5 werden also die herstellungsbedingten Längentoleranzen der Reibklötze durch Justieren des ersten Verschlußteiles 64 auf der Keilfläche 63 und die Wärmedehnung durch die Tellerfeder 72 aufgenommen.

Bei allen vorstehend beschriebenen, erfindungsgemäßen Ausführungsformen des Bremsklotzes werden die herstellugnsbedingten Längentoleranzen der Reibklötze, welche den Wert von ca. 12 mm betragen können, bei der Montage der Reibklötze durch eine Justierung aufgenommen, der Hub der jeweiligen Feder muß lediglich die Wärmelängsdehnungen der Reibklötze bei deren Erwärmung aufnehmen. Beim Ausführungsbeispiel nach Fig.6 nimmt dagegen die Feder sowohl die Längentoleranzen wie auch die Wärmelängsdehnung der Reibklötze auf.

Nach Fig.6 ist das erste, nicht dargestellte Verschlußteil wie zu den Fig.2 und 3 beschrieben ausgebildet. Das zweite Verschlußteil 74 ist zwischen den Wangen 20 des Bremsklotzhalters 1 verschieblich gelagert, es übergreift mit einer Abkröpfung 75 an seinem einen Ende die Mündung 7 und ist an seinem anderen Ende mit einer entgegengesetzt gerichteten Abkröpfung 76 versehen, welche als Widerlager für eine Feder 77 dient. Die Feder 77 erstreckt sich parallel zum Mittelabschnitt des zweiten Verschlußteiles 74 über diesem und liegt an ihrem der Abkröpfung 76 abgewandten Ende am Kopfteil 78 eines Führungsbolzens 79 an. Der Kopfteil 78 ist mittels eines Querbolzens 80 an den Wangen 20 des Bremsklotzhalters 1 gehalten. Der Führungsbolzen 79 durchgreift verschieblich die Feder 77 und eine Bohrung in der Abkröpfung 76, am die Abkröpfung 76 überragenden, freien Ende ist der Führungsbolzen 79 mit einem zu ihm quer verlaufenden Sicherungsstift 81 versehen. Dicht vor der der Führungsbahn 2 abgewandten Stirnfläche der Abkröpfung 76 verbindet ein Querstift 82 die Wangen 20, er dient im Verein mit dem Querbolzen 80 bzw. den an diesem angelenkten Kopfteil 78 der längsverschieblichen Führung des zweiten Verschlußteiles 74. Federabgewandt liegt an der Abkröpfung 76 ein Drehnocken 83 an, welcher als eine Auskröpfung einer in den Wangen 20 drehbar gelagerten Welle 84 ausgebildet ist. Außerhalb der Wangen 20 ist die Welle 84 zu beiden Seiten rechtwinklig zu Griffen 85 abgebogen. Gegebenenfalls unter Zuhilfenahme eines auf einen Griff 85 aufzusteckenden Verlängerungsrohres kann die Welle aus ihrer Stellung I um etwa 90° im Uhrzeigersinn in ihre strichpunktiert dargestellte Stellung II gedreht werden, wobei der Drehnocken 83 gegen die Abkröpfung 76 anläuft und diese unter Spannen der Feder 77 gemäß Fig.6 nach oben drückt, bis er nach Überschreiten einer einer maximalen Federspannung entsprechenden Drehstellung am Führungsbolzen 79 anschlägt, wie es ebenfalls strichpunktiert dargestellt ist, und hierdurch an einem Weiterdrehen gehindert ist. Die Stirnfläche der Abkröpfung 76 gelangt bei dieser Verschiebung nicht außerhalb des Bereiches des Querstiftes 82. 1n der unter max. Kompression der Feder 77 erreichten Stellung, in welcher die Abkröpfung 77 max. von der Mündung 7 abgehoben ist, befinden sich die Reibklötze 3 verspannungsfrei in der Führungsbahn 2, sie können nach Lösen des ersten Verschlußteiles aus der Führungsbahn 2 entnommen und in diese wieder eingeführt werden. Nach Anbringen des ersten Verschlußteiles wird der Drehnocken 83 aus der strichpunktierten Stellung 11 in die ausgezogen dargestellte Stellung I zurückgedreht, wobei das zweite Verschlußteil 74 aus seiner ebenfalls strichpunktiert dargestellten in seine ausgezogen gezeichnete Lage unter teilweiser Entspannung der Feder 77 zurückgedrückt wird. Dabei gelangt die Abkröpfung 75 zur Anlage am obersten Reibklotz 3, so daß dieser und damit auch alle anderen Reibklötze bis zum ersten Verschlußteil von der Kraft der Feder 77 belastet und längsverspannt werden. Die Vorspannung der Feder 77 ist in dieser Stellung immer noch so hoch, daß sie unabhängig von den Längentoleranzen und der Wärmedehnung der Reibklötze 3, welche die Hubstellung des zweiten Verschlußteiles 74 bestimmen, immer noch größer ist, als die maximal auf die Reibklötze 3 einwirkende Verschiebekraft.

Sollte die Feder 77 erlahmen, so kann sie durch reibkraftbewirkte Verschiebung der Reibklötze 3 maximal auf Block gedrückt werden, wodurch - ebenso wie durch den Sicherungsstift 81 - ein ein Verlieren von Reibklötzen 3 ausschließender Notanschlag für das Verschlußteil 74 gegeben ist.

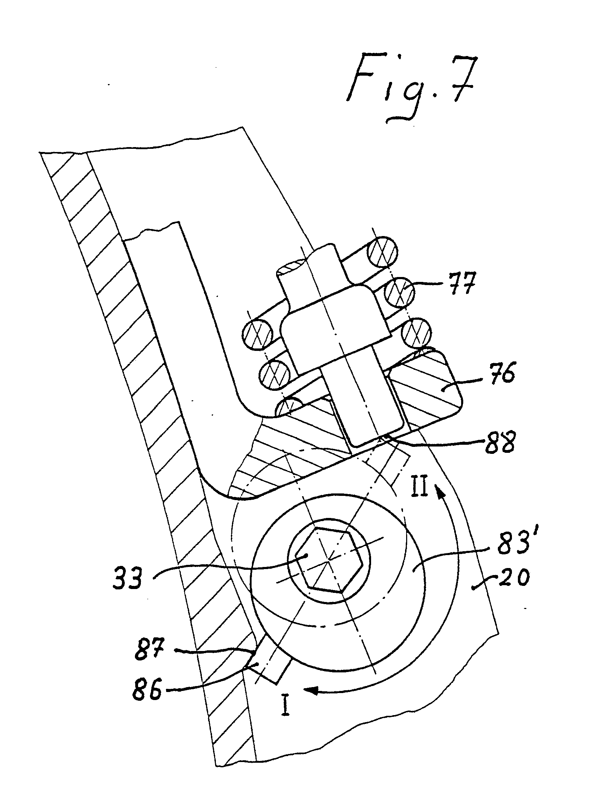

Nach Fig.7 ist ein runder Drehnocken 83' mit exzentrischer Halterung auf einer Sechskantwelle 33 vorgesehen, die, wie zu Fig.2 beschrieben, in den Wangen 20 drehbar gelagert und mittels eines Werkzeuges manuell drehbar ist; die Umfangsfläche des Drehnockens 83' wirkt mit der Abkröpfung 76 zusammen. Ein mit dem Drehnocken 83' drehfest verbundener Querstift 86 schlägt in den Drehnocken-Endstellungen I und II, welche wie zum Drehnocken 83 nach Fig.6 beschrieben liegen, an Anschlägen 87 bzw. 88 zum sicheren Einstellen dieser Endstellungen an. Als Feder ist eine Schraubenfeder 77 vorgesehen. 1m weiteren entspricht die Anordnung nach Fig.7 derjenigen nach Fig.6.

Es ist festzustellen, daß bei den Ausführungsbeispielen nach Fig.2 und 3 der Nocken 31, bei der Ausführung nach Fig.4 die Verschraubung 55, bei der Ausführung nach Fig.5 die Keilfläche 63 in Verbindung mit dem Schraubbolzen 66 und bei der Ausführung nach Fig.6 der Drehnocken 83 eine Vorrichtung mit integrierter Übersetzung zum Spannen der jeweils kräftig ausgebildeten Feder 25,47,60,72 und 77 bildet, wodurch ein manuelles Spannen bei mäßiger Anstrengung möglich ist. Bei den Ausführungsformen nach Fig.2 bis 5 kann zudem die jeweilige Feder 25,47,60 bzw. 72 relativ kurz und hart ausgebildet werden, da sie lediglich die geringe Wärmelängsdehnung der Reibklötze 3 aufzunehmen hat. Bei der Ausführung nach Fig.6 oder 7 dagegen muß die Feder 77 relativ weich und dementsprechend lang ausgebildet werden, da sie zusätzlich die Längentoleranzen der Reibklötze 3 aufnehmen muß; der Hubbereich des Drehnockens 83 muß zumindest der Summe der Längentoleranzen sowie der Wärmedehnung der Reibklötze 3 entsprechen.

Anstelle der in den Fig.2 bis 6 dargestellten Tellerfedern sind auch andere Federarten, wie Blattfedern oder Schraubenfedern, verwendbar; die in Fig.7 dargestellte Schraubenfeder ist entsprechend abwandelbar. Die Schraubenfedern weisen die Vorteile auf, daß sie billig sind, wie zu den Tellerfedern beschrieben auf Block drückbar sind und daß sich an ihnen ansetzender Schmutz wieder abfällt bzw. leicht entfernbar ist.

Bezugszeichenliste

1. Bremsklotzhalter
2. Führungsbahn
3. Reibklotz
4. Halteabschnitt
5. Lagerauge
6. Mündung
7. Mündung
8. erstes Verschlußteil
9. zweites Verschlußteil
10. Querbolzen
11. Abschnitt
12. Querstift
13. Feder
14. Führungsstange
15. Querstift
16. Ausnehmung
17. Anschlagfläche
18. Verschiebung
19. Abschnitt
20. Wange
21. Bolzenansatz
22. Quersteg
23. Federkäfig
24. Ausnehmung
25. Tellerfeder
26. Federteller
27. Wandung
28. Feder
29. Nase
30. Stirnfläche
31. Nocken
32. Außenumfang
33. Sechskantwelle
34. Federring
35. Stummel
36. Tiefe
37. Steigung
38. Höhendifferenz
39. Nase
40. Hub
41. Querbohrungen
42. Ansatz
43. Querbolzen
44. Zugfeder
45. Doppelnase
46. Höhe
47. Gummifeder
48. Querbolzen
49. Hebel
50. Hebelende
51. Hebelende
52. Lagerfläche
53. Kopfende
54. Stößel
55. Verschraubung
56. Kontermutter
57. Mutterteil
58. Federtopf
59. Bolzen
60. Tellerfeder
61. Querstift
62. Langloch
63. Keilfläche
64. erstes Verschlußteil
65. Schenkel
66. Schraubbolzen
67. Bohrung
68. Mutter
69. zweites Verschlußteil
70. Buchse
71. Ringflansch
72. Tellerfeder

73. Schraubbolzen
74. Verschlußteil
75. Abkröpfung
76. Abkröpfung
77. Feder
78. Kopfteil
79. Führungsbolzen
80. Querbolzen
81. Sicherungsstift
82. Querstift
83. Drehnocken
83' Drehnocken
84. Welle
85. Griff
86 Querstift
87 Anschlag
88 Anschlag
I Stellung
II Stellung

**Ansprüche**

1. Bremsklotz für Schienenfahrzeuge, mit einem Bremsklotzhalter (1) und einer Vielzahl von Reibklötzen (3), wobei der Bremsklotzhalter (1) eine der Laufflächenkrümmung des abzubremsenden Rades angepaßte, schwalbenschwanzartige Führungsbahn (2) zur Halterung der in diese eingreifenden, bezogen auf die Länge der Führungsbahn (2) kurzen, aneinander anliegenden Reibklötze (3) aufweist und wobei die Mündungen (6;7) der Führungsbahn (2) einerseits von einem mit dem Bremsklotzhalter (1) starr, jedoch lösbar verbundenen, ersten Verschlußteil (8;64) und andererseits von einem am Bremsklotzhalter (1) in Längsrichtung der Führungsbahn (2) begrenzt beweglich gehaltenen, zweiten Verschlußteil (9;49;69;74) verschlossen ist, und mit einer manuell spannbaren Feder (25;47;60;72;77), welche zwischen dem Bremsklotzhalter (1) und das zweite Verschlußteil (9;49;69;74), letzteres mit ihrer Vorspannkraft zur Mündung (7) der Führungsbahn (2) hin belastend, einspannbar ist, dadurch gekennzeichnet, daß die Vorspannkraft der Feder (25;47;60;72;77) die maximal von den Reibklötzen (3) in Längsrichtung der Führungsbahn (2) ausübbare, freie Verschiebekraft übersteigt und daß am Bremsklotzhalter (1) eine manuell betätigbare Vorrichtung mit integrierter Übersetzung zum Spannen der Feder (25;47;60;72;77) vorgesehen ist.

2. Bremsklotz nach Anspruch 1, dadurch gekennzeichnet, daß die Feder eine Tellerfeder bzw. Blattfeder oder Schraubenfeder (25;60;72;77) ist.

3. Bremsklotz nach Anspruch 2, wobei am Bremsklotzhalter (1) ein das zweite Verschlußteil (74) nach einem der Summe der Längentoleranzen der Bremsklötze (3) und deren maximaler Wärmelängsdehnung entsprechenden, entgegen der Kraft der Feder (77) gerichteten Hub abfangender Anschlag vorgesehen ist, dadurch gekennzeichnet, daß der Anschlag durch die nach dem genannten Hub auf Block gedrückte Schraubenfeder oder Tellerfeder (77) gebildet ist (Fig.6,7).

4. Bremsklotz nach Anspruch 2, dadurch gekennzeichnet, daß die manuell betätigbare Vorrichtung ein am zweiten Verschlußteil (74) in Spannrichtung der Feder (77) angreifendes, unmittelbar nach Überschreiten einer maximaler Federspannung entsprechenden Drehstellung an einem ein Weiterdrehen hindernden Drehanschlag (79) anschlagendes Nockengetriebe (83,84) ist (Fig.6,7).

5. Bremsklotz nach Anspruch 1 oder 2, dadurch gekennzeichnet, daß eine Justiervorrichtung (31;55;63) vorgesehen ist, mittels welcher einer der Verschlußteile (9;49;64) innerhalb eines zumindest der Summe der Längentoleranzen der Reibklötze (3) entsprechenden Einstellbereiches justierbar direkt oder indirekt gegen den Bremsklotzhalter (1) abstützbar ist (Fig.2 bis 5).

6. Bremsklotz nach Anspruch 5, dadurch gekennzeichnet, daß die Justiervorrichtung (31;55) in den vom zweiten Verschlußteil (9;49) über die Feder (25;60) zum Bremsklotzhalter (1) führenden Kraftweg eingeordnet ist (Fig.2 bis 4).

7. Bremsklotz nach Anspruch 5 oder 6, dadurch gekennzeichnet, daß die Feder (25;60;72) nach einem den Wert der maximalen Wärmelängsdehnung der Reibklötze (3) höchstens geringfügig übersteigenden Einfederungshub durch einen Anschlag abfangbar ist (Fig.2 bis 5).

8. Bremsklotz nach den Ansprüchen 2 und 7, dadurch gekennzeichnet, daß der Anschlag durch die nach dem Einfederungshub auf Block gedrückte Teller- oder Schraubenfeder (25;60;72) gebildet ist.

9. Bremsklotz nach Anspruch 7 oder 8, dadurch gekennzeichnet, daß die manuell betätigbare Vorrichtung ein drehbarer Nocken (31) ist, dessen Außenumfang (32) gewellt ausgebildet ist, wobei die wirksame Tiefe (36) bzw. Höhe (46) einer jeden Wellung etwa der maximalen Wärmelängsdehnung der Reibklötze (3) und die Nocken-Gesamthöhe (37) etwa der Summe der Längentoleranzen der Reibklötze (3) entspricht, und daß sich die Feder (25;47) gegen den Außenumfang (32) des Nockens (31) abstützt (Fig.2 und 3).

10. Bremsklotz nach Anspruch 8 und 9, dadurch gekennzeichnet, daß der Nocken (31) am Bremsklotzhalter (1) gelagert und die Feder (25;47) in einem Federkäfig (23) des zweiten Verschlußteiles (9) angeordnet ist, wobei am nockenseitigen Federende ein im Federkäfig (23) begrenzt beweglich gehaltener Federteller (26) anliegt, der mit einer vorspringenden Nase (39;45) am Nocken (31) abgestützt ist.

11. Bremsklotz nach Anspruch 10, dadurch gekennzeichnet, daß das zweite Verschlußteil (9) eine Aussparung (24) aufweist, deren Wandung den Nocken (31) mit Spiel umgibt.

12. Bremsklotz nach Anspruch 10, dadurch gekennzeichnet, daß die Nase (39) auf den Grundflächen der Wellung abstützbar ist (Fig.2).

13. Bremsklotz anch Anspruch 10, dadurch gekennzeichnet, daß die Nase (45) eine gerundete Ausnehmung aufweist, mit deren Grund sie auf den Kopfflächen der Wellung abstützbar ist (Fig.3).

14. Bremsklotz nach Anspruch 12 oder 13, dadurch gekennzeichnet, daß das zweite Verschlußteil (9) von einer zur Kraft der Feder schwachen, elastischen Kraft (28;44) in Entfernungsrichtung von der Mündung (7) belastet ist (Fig.2 und 3).

15. Bremsklotz nach Anspruch 14, dadurch gekennzeichnet, daß das zweite Verschlußteil (9;74) nahe seiner Enden durch wenigstens einen es quer übergreifenden, am Bremsklotzhalter (1) gehaltenen Bolzen (15;43;80;82) geführt ist.

16. Bremsklotz nach Anspruch 7, dadurch gekennzeichnet, daß das zweite Verschlußteil als am Bremsklotzhalter (1) drehbar gelagerter Hebel (49) ausgebildet ist, an dessen einem Ende (51) die Feder (60) in Einschwenkrichtung des anderen Endes (50) vor die Mündung (7) angreift und daß die Feder (60) in einem am Bremsklotzhalter (1) angelenkten Federtopf (58) angeordnet ist, in welchen ein durch eine Verschraubung (55) längeneinstellbarer Stößel (54) eingreift, dessen eines Ende an der Feder (60) und dessen anderes Ende am einen Ende (51) des Hebels (49) anliegt (Fig.4).

17. Bremsklotz anch Anspruch 16, gekennzeichnet durch einen das federtopfseitige Ende des Stößels (54) und den Federtopf (58) durchgreifenden Querstift (61), der in einem dieser Teile mittels einer Langlochführung (62) begrenzt verschieblich geführt ist.

18. Bremsklotz nach Anspruch 7, dadurch gekennzeichnet, daß das erste Verschlußteil (64) mittels eines etwa rechtwinklig zum zugeordneten Endabschnitt der Führungsbahn (2) verlaufenden, es gegen eine in Entfernungsrichtung von der Mündung (6) ansteigende Keilfläche (63) andrückenden, ersten Schraubbolzens (66) am Bremsklotzhalter (1) befestigt ist und daß das zweite Verschlußteil (69) mittels eines etwa parallel zum zugeordneten Endabschnitt der Führungsbahn (2) verlaufenden, zweiten Schraubbolzens (73) am Bremsklotzhalter (1) gehalten ist, wobei zwischen dem Kopf des zweiten Bolzens (73) und das zu diesem bewegliche, zweite Verschlußteil (69) die mittels einer Abstandhülse (70) begrenzt komprimierbare Feder (72) eingespannt ist (Fig.5).

19. Bremsklotz nach einem oder mehreren der vorstehenden Ansprüche, dadurch gekennzeichnet, daß die wenigstens eine Seitenwand der Führungsbahn (2) und die Reibklötze (3) zueinander fluchtende Querbohrungen (41) oder dergleichen aufweisen, in welche zur Montageerleichterung der Reibklötze (3) in der Führungsbahn (2) erstere in ihrer korrekten Lage haltende Stifte einführbar sind, welche spätestens bei Montageabschluß wieder zu entfernen sind.

**Claims**

1. Brake block for railway vehicles, having a brake block holder (1) and a plurality of friction blocks (3), wherein the brake block holder (1) has a dovetailed guideway (2), adapted to the running surface curvature of the wheel to be braked, for holding the friction blocks (3) engaging into it, the friction blocks (3) being short relative to the length of the guideway (2) and in abutment with one another, and wherein the openings (6;7) of the guideway (2) are closed on the one hand by a first closing part (8;64) which is rigidly connected to the brake block holder (1), although releasably, and on the other hand by a second closing part (9;49;69;74) held on the brake block holder (1) in the longitudinal direction of the guideway (2) with limited movement, and having a spring (25;47;60;72;77) which can be stressed manually and which can be clamped between the brake block holder (1) and the second closing part (9;49;69;74), stressing the latter with its prestressing force towards the opening (7) of the guideway (2), characterized in that the prestressing force of the spring (25;47;60;72;77) exceeds the maximum free displacement force which can be exerted by the friction blocks (3) in the longitudinal direction of the guideway (2), and in that on the brake block holder (1) there is provided a manually operable device with integrated transmission for the tensioning of the spring (25;47;60;72;77).

2. Brake block according to claim 1, characterized in that the spring is a plate spring or leaf-type spring or spiral spring (25;60;72;77).

3. Brake block according to claim 2, wherein on the brake block holder (1) there is provided a stop which catches the second closing part (74) after a stroke corresponding to the sum of the length tolerances of the brake blocks (3) and their maximum thermal longitudinal expansion, and directed against the force of the spring (77), characterized in that the stop is formed by the spiralspring or plate spring (77) pressed on to block after the said stroke (Figures 6, 7).

4. Brake block according to claim 2, characterized in that the manually operable device is a cam gearing (83, 84) engaging on the second closing part (74) in tensioning direction of the spring (77), stopping, directly after exceeding a position of rotation corresponding to maximum spring bias, on a rotary stop (79) preventing a further rotation (Figures 6,7).

5. Brake block according to claim 1 or 2, characterized in that an adjusting device (31;55;63) is provided, by means of which one of the closing parts (9;49;64), adjustable within an adjusting region corresponding at least to the sum of the length tolerances of the friction blocks (3), can be supported directly or indirectly against the brake block holder (1) (Figures 2 to 5).

6. Brake block according to claim 5, characterized in that the adjusting device (31, 55) is arranged in the force path leading from the second closing part (9;49) by means of the spring (25;60) to the brake block holder (1) (Figures 2 to 4).

7. Brake block according to claim 5 or 6, characterized in that the spring (25;60;72) can be caught by a stop after a spring deflection stroke which at most slightly exceeds the value of the maximum thermal longitudinal expansion of the friction blocks (3) (Figures 2 to 5).

8. Brake block according to claims 2 and 7, characterized in that the stop is formed by the plate or screw spring (25;60;72) pressed on to block after the spring deflection stroke.

9. Brake block according to claim 7 or 8, characterized in that the manually operable device is a rotatable cam (31), the outer circumference (32) of which is constructed in a corrugated manner, where the effective depth (36) or height (46) of each corrugation corresponds approximately to the maximum thermal longitudinal expansion of the friction blocks (3) and the cam total height (37) approximately to the sum of the length tolerances of the friction blocks (3), and in that the spring (25;47) is supported against the outer circumference (32) of the cam (31) (Figures 2 and 3).

10. Brake block according to claim 8 and 9, characterized in that the cam (31) is mounted on the brake block holder (1) and the spring (25;47) is arranged in a spring cage (23) of the second closing part (9), wherein on the cam-side spring end there rests a spring plate (26) held in the spring cage (23) with limited movement, being supported on the cam (31) with a projecting lug (39;45).

11. Brake block according to claim 10, characterized in that the second closing part (9) has a cutout (24), the wall of which surrounds the cam (31) with clearance.

12. Brake block according to claim 10, characterized in that the lug (39) can be supported on the base surfaces of the corrugation (Figure 2).

13. Brake block according to claim 10, characterized in that the lug (45) has a rounded recess, with the base of which it can be supported on the head surfaces of the corrugation (Figure 3).

14. Brake block according to claim 12 or 13, characterized in that the second closing part (9) is stressed by an elastic force (28;44) in a direction away from the opening (7), the force being weak with regard to the force of the spring (Figures 2 and 3).

15. Brake block according to claim 14, characterized in that the second closing part (9;74) near its ends is guided by at least one bolt (15;43;80;82) engaging over it transversely and held on the brake block holder (1).

16. Brake block according to claim 7, characterized in that the second closing part is constructed as a lever (49) rotatably mounted on the brake block holder (1), on the one end (51) of which lever the spring (60) engages, in the direction of pivoting-in of the other end (50) in front of the opening (7), and in that the spring (60) is arranged in a spring pot (58) hinged to the brake block holder (1), into which spring pot a push rod (54) engages which can be adjusted in length through a screw connection (55), the one end of the push rod resting against the spring (60) and the other end resting against the one end (51) of the lever (49) (Figure 4).

17. Brake block according to claim 16, characterized by a crosspin (61) engaging through the spring-pot-side end of the push rod (54) and the spring pot (58), the crosspin being guided with limited displacement in one of these parts by means of a slot guide (62).

18. Brake block according to claim 7, characterized in that the first closing part (64) is fastened to the brake block holder (1) by means of a first screw bolt (66) extending approximately at right angles to the associated end section of the guideway (2) and pressing it against a wedge surface (63) rising in a direction away from the opening (6), and in that the second closing part (69) is held on the brake block holder (1) by means of a second screw bolt (73) extending approximately parallel to the associated end section of the guideway (2), wherein between the head of the second bolt (73) and the second closing part (69) moving with regard to it, the spring (72) which can be compressed in a limited manner by means of a spacer sleeve (70) is clamped (Figure 5).

19. Brake block according to one or several of the above claims, characterized in that at least one side wall of the guideway (2) and the friction blocks (3) have cross holes (41) or suchlike flush with one another, into which for the facilitation of the assembly of the friction blocks (3) in the guideway (2) first pins holding in its correct position can be inserted, which are to be removed again at the latest when assembly is completed.

## Revendications

1. Sabot de frein pour des véhicules sur rails, avec un support de sabot de frein (1) et une multiplicité de sabots de friction (3), ledit support de sabot de frein (1) comportant une voie de guidage (2) adaptée à la courbure de la surface de roulement de la roue à freiner, en forme de queue d'aronde, servant à supporter les sabots de friction (3) qui portent les uns contre les autres, qui pénètrent dans ladite voie de guide et qui sont courts par rapport à la voie de guidage, et les entrées (6 ; 7) de la voie de guidage (2) étant fermées, d'une part, par un premier élément de fermeture (8 ; 64) relié rigidement au support de sabot de frein (1), mais étant détachable, et, d'autre part par un second élément de fermeture (9 ; 49 ; 69 ; 74) monté sur le support de sabot de frein (1) de manière à se déplacer de façon limitée dans la direction longitudinale de la voie de guidage (2), et avec un ressort (25 ; 47 ; 60 ; 72 ; 77) susceptible d'être armé manuellement, lequel ressort est susceptible d'être armé entre le support de sabot de frein (1) et le second élément de fermeture (9 ; 49 ; 69 ; 74) en chargeant ce dernier, par la force de sa précontrainte, vers l'entrée (7) de la voie de guidage (2), caractérisé par le fait que la force de la précontrainte du ressort (25 ; 47 ; 60 ; 72 ; 77) dépasse la force de déplacement maximale qui peut être exercée par les sabots de friction (3) dans la direction longitudinale de la voie de guidage, et qu'il est prévu sur le support de sabot de frein (1) un dispositif à commande manuelle et à transmission à démultiplication intégrée, pour armer le ressort (25 ; 47 ; 60 ; 72 ; 77).

2. Sabot de frein selon la revendication 1, caractérisé par le fait que le ressort est un ressort à disques, une lame de ressort ou un ressort hélicoïdal (25 ; 60 ; 72 ; 77).

3. Sabot de frein selon la revendication 2, du type dans lequel il est prévu, une butée qui intercepte le second élément de fermeture (74), après une course qui est dirigée à l'encontre de la force du ressort (70), et correspondant à la somme des tolérances longitudinales des sabots de frein (3) et de leur allongement maximum sous l'effet de la chaleur, caractérisé par le fait que la butée est constituée par le ressort hélicoïdal ou le ressort à disques (77), comprimé au maximum (figure 6, 7).

4. sabot de frein selon la revendication 2, caractérisé par le fait que le dispositif à commande manuelle est constitué par une transmission à came (83, 84) qui attaque l'élément de fermeture (74) dans le sens de l'armement du ressort (77), immédiatement après le dépassement d'une position de rotation qui correspondant à la tension maximale du ressort, ladite transmission à came butant contre une butée (79) qui empêche toute rotation ultérieure (figure 6, figure 7).

5. Sabot de frein selon la revendication 1 ou 2, caractérisé par le fait qu'il est prévu un dispositif de réglage (31 ; 55 ; 63), à l'aide duquel l'un des éléments de fermeture (9 ; 49 ; 64) est susceptible d'être ajusté directement à l'intérieur du zone de réglage qui correspond au moins à la somme des tolérances longitudinales des sabots de friction (3), ou pouvant porter indirectement contre le support du sabot de frein (1) (figure 1 à 5).

6. Sabot de frein selon la revendication 5, caractérisé par le fait que le dispositif de réglage (31, 55) est disposé dans la voie de transmission des forces, située entre le second élément de fermeture (9 ; 49) et le support de frein (1), en passant par l'intermédiaire du ressort (25 ; 60) (figure 2 à 4).

7. Sabot de frein selon la revendication 5 ou 6, caractérisé par le fait que le ressort (25 ; 60 ; 72) est susceptible d'être intercepté par une butée après une course élastique qui, au maximum, est faiblement supérieure à la valeur de la dilation thermique maximale des sabots de friction (3) (figure 2 à 5).

8. sabot de frein selon les revendications 2 et 7, caractérisé par le fait que la butée est constituée par le ressort à disques ou le ressort hélicoïdal (25 ; 60 ; 72) écrasé après la course élastique.

9. Sabot de frein selon la revendication 7 ou 8, caractérisé par le fait que le dispositif actionné manuellement est constitué par une came tournante (31) dont la périphérie extérieure (32) est ondulée, étant noté que la profondeur efficace (36) ou la hauteur (46) de chacune des ondulations correspond sensiblement à la dilation thermique longitudinale des sabots de friction (3) alors que la hauteur totale des cames (37) correspond sensiblement à la somme des tolérances longitudinales des sabots de friction (3) et que le ressort (25 ; 47) prend appui contre la périphérie extérieure (32) de la came (31) (figure 2 et 3).

10. Sabot de frein selon les revendications 8 et 9, caractérisé par le fait que la came (31) est montée sur le support de sabot de frein (1), et le ressort (25 ; 47) est disposé dans une cage à ressorts (23) du second élément de fermeture (9), étant noté qu'au niveau de l'extrémité du ressort située du côté de la came, une cuvette de ressort (26), qui est disposée, avec une possibilité de déplacement limité, dans une cage à ressorts, ladite cuvette à ressorts prenant appui, par un bec saillant (39 ; 45), contre la came (31).

11. Sabot de frein selon la revendication 10, caractérisé par le fait que le second élément de fermeture (9) comporte une ouverture (24) dont la paroi, entoure avec jeu la came (3l).

12. Sabot de frein selon la revendication 1O, caractérisé par le fait que le bec (39) est susceptible de prendre appui sur les surfaces de fond des ondulations (figure 2).

13. Sabot de frein selon la revendication 10, caractérisé par le fait que le bec (45) comporte une ouverture arrondie avec le fond de laquelle il est susceptible de prendre appui sur les surfaces sommitales des ondulations (figure 3).

14. Sabot de frein selon la revendication 12 ou 13, caractérisé par le fait que le second élément de fermeture (9) est chargé par une force élastique (28 ; 44), faible par rapport à la force du ressort, et cela dans le sens de l'éloignement de l'ouverture (7) (figure 2 et 3).

15. Sabot de frein selon la revendication 14, caractérisé par le fait que le second élément de fermeture (9 ; 74) est guidé, près de ses extrémités, par au moins un boulon porté par le support de sabot de frein (1) et traversant ledit second élément de fermeture.

16. Sabot de frein selon la revendication 7, caractérisé par le fait que le second élément de fermeture est réalisé sous la forme d'un levier (49) monté à rotation sur le support de sabot de frein (1), et dont une extrémité (51) attaque, dans le sens de basculement de l'autre extrémité (15), le ressort (60) devant l'ouverture (7), et que le ressort (60) est disposé sur un pot à ressorts (58), articulé sur le support de sabot de frein (1), pot dans lequel pénètre un poussoir (54), réglable dans le sens longitudinal à l'aide d'un vissage (5), et dont l'une extrémité porte contre le ressort (60), alors que son autre extrémité porte contre une extrémité (51) du levier (49) (figure 4).

**17.** Sabot de frein selon la revendication 16, caractérisé par une cheville transversale (61) traversant l'extrémité du poussoir (61), située du côté du pot, à ressorts, et le pot à ressort (58), laquelle cheville transversale est guidée, avec déplacement limité, à l'aide d'une boutonnière (62), dans l'un de ces éléments.

**18.** Sabot de frein selon la revendication 7, caractérisé par le fait que le premier élément de fermeture (64) est fixé au support de sabot de frein (1) à l'aide d'un premier boulon (66) s'étendant à peu près à angle droit par rapport à la section terminale associée de la piste de guidage (2) et l'applicant contre une surface cunéiforme (63) qui croît dans le sens de l'éloignement de l'ouverture (6), et que le second élément de fermeture (69) est porté par le support de sabot de frein (1) à l'aide d'un second boulon (73) qui s'étend à peu près parallèlement à la section d'extrimité associée de la piste de guidage (2), étant noté qu'entre la tête du second boulon (73) et le second élément de fermeture (69), mobile par rapport à ce dernier, est serré le ressort (72) qui est susceptible d'être comprimé, de façon limité, à l'aide d'une douille d'entretoise (70) (figure 5).

**19.** Sabot de frein selon une ou plusieurs des revendication précédentes, caractérisé par le fait qu'au moins une paroi latérale de la piste de guidage (2) et les perçages transversaux (41), ou similaires, présentent des perçages transversaux alignés entre eux (41), dans lesquels, en vue d'une facilité de montage des sabots de friction (3) dans la piste de guidage (2), sont susceptibles d'être insérés des chevilles pour maintenir les premiers dans leur position correcte, lesquelles chevilles sont ensuite à enlever, au plus tard à la fin du montage.

Fig. 1

Stand der
Technik

Fig.2

Fig. 2a

Fig.3

Fig.3a

Fig. 4

EP 0 278 376 B1

Fig. 5

19

Fig.6

Fig.7